# EUROPÄISCHE PATENTANMELDUNG

(11) **EP 3 674 133 A1**
(43) Veröffentlichungstag der Anmeldung: **01.07.2020**
(21) Anmeldenummer: 19200048.7
(22) Anmeldetag: 27.09.2019
(51) Int. Cl.: B60N 2/42, B60N 2/427, B60N 2/64, B61D 33/00

(54) **CRASHELEMENT, FAHRGASTSITZ MIT EINEM CRASHELEMENT, SCHIENENFAHRZEUG MIT EINEM FAHRGASTSITZ, VERFAHREN ZUR HERSTELLUNG EINES FAHRGASTSITZES SOWIE VERWENDUNG EINES CRASHELEMENTES**

(30) Priorität: 28.12.2018 EP 18248235
(71) Anmelder: Stadler Rail AG, 9565 Bussnang (CH)
(72) Erfinder: Lunardon, Andreas, 6971 Hard (AT)
(74) Vertreter: Hepp Wenger Ryffel AG

(57) **Zusammenfassung**

Crashelement (6, 6', 6'') zur Befestigung an einem Fahrgastsitz (1) eines Schienenfahrzeuges. Das Crashelement umfasst ein Dämpfelement zur Aufnahme von Kräften bei einem Aufprall und ein Befestigungssystem. Das Befestigungssystem ist derart ausgebildet, dass es eine Befestigung an einer Rückenschale (5) eines Fahrgastsitzes ermöglicht. Insbesondere weist das Befestigungssystem eine Klebstofffläche und/oder eine Schraubvorrichtung und/oder Öffnungen zum Vernieten auf.

## Beschreibung

Die Erfindung betrifft ein Crashelement, einen Fahrgastsitz mit einem Crashelement, ein Schienenfahrzeug mit einem Fahrgastsitz, ein Verfahren zur Herstellung von Fahrgastsitzen sowie die Verwendung eines Crashelementes gemäss dem Oberbegriff der unabhängigen Ansprüche.

Beim Aufprall eines schnell fahrenden Fahrzeugs auf ein Hindernis wird das Fahrzeug abrupt abgebremst und die Insassen entsprechend nach vorne geschleudert, wo sie gegen die vor ihnen befindlichen Strukturen, z.B. Lenkrad, Armaturenbrett oder Sitze prallen. Bei derartigen Unfällen können sich die Insassen schwere Verletzungen zuziehen.

Um die Folgen eines solchen Aufpralls zu reduzieren werden bei Personenfahrzeugen häufig Sicherheitsgurte verbaut, welche bei einem Unfall die Person auf ihrem Sitz halten indem der Gurt auf bekannte Weise blockiert, oder Airbags installiert, welche sich bei einem Crash aufblasen. Dadurch lassen sich die Unfallfolgen reduzieren.

Üblicherweise sind in einem Schienenfahrzeug keine Sicherheitsgurte verbaut. Im Falle einer Kollision wird ein Passagier gegen den vor ihm befindlichen Sitz geschleudert. Daher müssen Fahrgastsitze bei Fahrzeugen mit Reihenbestuhlung ohne Sicherheitsgurte so ausgelegt werden, dass sie einen Aufprall einer in der Sitzreihe hinter dem Sitz befindlichen Person hinreichend dämpfen um nach Möglichkeit schwere Verletzungen zu vermeiden.

Es sind mehrere Lösungsansätze bekannt um solche aufpralldämpfenden Fahrgastsitze zu realisieren, z.B. indem in den Sitz, insbesondere in den Rückenbereich und/oder die Kopfstütze ein Airbag integriert wird (US5738368 bzw. WO16053460) oder indem der Sitz mit mechanischen Strukturen vorgegebener Dämpfung ausgestattet ist, die im Falle eines Unfalls den Aufprall abdämpfen sollen (DE202017105455U oder DE102016116213). Einschlägige Normen (z.B. GMRT 2100, APTA) geben maximale Kräfte vor, welche bei einem Unfall noch auf die aufprallende Person wirken dürfen, die Aufpralldämpfer sind entsprechend auszulegen.

Derartige integrierte Aufpralldämpfer haben eine Reihe von Nachteilen: zum einen vergrössern sie das Volumen des Sitzes als Ganzes, da sie Platz innerhalb der Struktur beanspruchen, dadurch geht im Fahrzeug Platz verloren und die Transportkapazität sinkt. Da die zu absorbierende Aufprallenergie u.a. eine Funktion des Sitzabstandes ist, sind ausserdem für unterschiedliche Sitzteiler unterschiedliche Sitze mit jeweils abgestimmten Aufpralldämpfern nötig.

Es ist daher Aufgabe der Erfindung die Nachteile des Standes der Technik zu vermeiden und insbesondere einen Fahrgastsitz derart mit aufpralldämpfenden Elementen zu versehen, dass er unter Beibehaltung der tragenden Struktur des Sitzes an unterschiedliche Sitzteiler anpassbar ist, möglichst wenig Platz benötigt und dennoch den vorgegebenen normativen Anforderungen genügt.

Die Aufgabe wird durch die kennzeichnenden Merkmale der unabhängigen Ansprüche gelöst.

Insbesondere wird die Aufgabe durch ein Crashelement zur Befestigung an einem Fahrgastsitz eines Schienenfahrzeuges gelöst, welches ein Dämpfelement zur Aufnahme von Kräften bei einem Aufprall umfasst. Das Crashelement umfasst ein Befestigungssystem, welches derart ausgebildet ist, dass es eine Befestigung an einer Rückenschale eines Fahrgastsitzes ermöglicht. Das Crashelement weist eine Klebstofffläche und/oder eine Schraubvorrichtung und/oder Öffnungen zum Vernieten auf.

Ein derartiges Crashelement schützt die Passagiere und schwere Verletzungen werden vermieden.

Die auslegungsgemässe Aufprallkraft ist die maximale Kraft, die auf ein Knie oder Kopf eines Passagiers wirkt, wenn dieses auf einen Vordersitz prallt. Diese beträgt mindestens 3.5kN, wenn kein Abstand zwischen Knie und Vordersitz besteht. Die Aufprallkraft nimmt linear mit dem Abstand zu, je weiter die Knie eines Passagiers vom Vordersitz entfernt sind. Da beispielsweise der Oberschenkelknochen eines Menschen nur bestimmte Kräfte aushalten kann, ehe schwere Verletzungen entstehen, ist es von Vorteil, den Abstand zwischen den Knien des Passagiers und dem Vordersitz zu senken. Weiter kann die Aufprallkraft gesenkt werden, wenn das Crashelement dazu ausgelegt ist, zumindest einen Teil der Aufprallkraft aufzunehmen.

Das Dämpfelement kann eine Dicke von 5 mm bis 150 mm aufweisen und insbesondere derart ausgebildet sein, dass bei einem auslegungsgemässen Aufprall sowohl elastische als auch plastische Verformungen des Crashelementes stattfinden. Bevorzugt ist das Crashelement dazu ausgelegt, dass eine maximale Aufprallenergie, insbesondere durch plastische Verformung des Crashelements, um 0.5-3 kN senkbar ist.

Ein derartiges Dämpfelement führt zu einem Schutz der aufprallenden Person vor schweren Verletzungen.

Bevorzugt umfasst das Crashelement eine Oberseite, die in einer Befestigungsposition oben angeordnet ist und eine Unterseite, die in der Befestigungsposition unten angeordnet ist. Bevorzugt umfasst die Oberseite eine erste Dicke und die Unterseite eine zweite, von der ersten unterschiedliche, Dicke, insbesondere eine grössere Dicke. Insbesondere umfasst die Oberseite des Crashelements eine Dicke von im Wesentlichen 10-35 mm, bevorzugt im Wesentlichen 29 mm. Insbesondere umfasst die Unterseite eine Dicke von im Wesentlichen 25-75mm, bevorzugt im Wesentlichen 50mm.

Das erlaubt eine einfache Anpassung an den Neigungswinkel der Rückenlehne des Vordersitzes, so dass ein geeigneter Abstand zum Vordersitz eingehalten werden kann. Die Länge des Crashelements kann zwischen 200 und 400mm, bevorzugt im Wesentlichen 350mm, betragen. Die Höhe des Crashelements kann zwischen 50 und 130 mm betragen, bevorzugt im Wesentlichen 98mm.

Das Dämpfelement kann Metalle wie Aluminium oder Kunststoffe wie Polyurethan als crashabsorbierendes Material umfassen oder aus diesen bestehen. Insbesondere kann das Dämpfelement Schaumstoffe umfassen oder daraus bestehen, bevorzugt Integralschaum. Das Crashelement muss mindestens die Brandschutzanforderungen der EN 45545 HL2 [N1] erfüllen.

Vorzugsweise umfasst das Befestigungssystem ein Einlegelement zum Verschrauben mit dem Fahrgastsitz.

Das erlaubt eine einfache, sichere Befestigung an der Rückenschale. Das Einlegelement kann im Crashelement integriert sein. Das Einlegelement kann aus Holz, Aluminium oder Stahlblech gefertigt sein. Das Einlegelement kann Spannplattenschrauben, Gewindebohrungen oder Blindnietmuttern umfassen. Ist das Crashelement mit Klebstoff befestigt, so umfasst der Klebstoff elastische Domänen, er ist also dazu ausgelegt, Energie aufzunehmen. So kann verhindert werden, dass sich das Crashelement bei einem Aufprall löst.

Die Aufgabe wird weiterhin durch einen Fahrgastsitz, insbesondere einen Fahrgastsitz für ein Schienenfahrzeug, bevorzugt ein Schienenfahrzeugfahrgastsitz, gelöst, der eine Rückenlehne und einen Sitzbereich umfasst. Die Rückenlehne umfasst mindestens eine Polsterung und eine Rückenschale, insbesondere eine mehrteilige Rückenschale. Die Rückenlehne ist an einem tragenden Sitzgestell befestigt oder bildet einen Teil des tragenden Sitzgestells. Die Polsterung ist auf einer ersten Seite der Rückenschale angeordnet. Auf einer zweiten Seite der Rückenschale, welche von der Polsterung weg weist ist mindestens ein Crashelement wie vorhergehend beschrieben befestigt.

Ein derartiger Fahrgastsitz erhöht die Sicherheit der Passagiere bei einem Crash. Ein Sitzabstand zwischen zwei Sitzreihen sollte in etwa 820mm betragen, um bei einem ein britischen 50-Perzentil-Mann keine schweren Verletzungen bei einem Crash hervorzurufen. Ist zwischen den Sitzen ein grösserer Abstand, so kann an der Rücklehne des vorderen Fahrgastsitzes mindestens ein Crashelement, wie vorhergehend beschrieben, beispielsweise zum Schutz der Knie oder das Kopfes, angeordnet sein. Idealerweise ist das Crashelement so ausgebildet, dass ein entsprechender Sitzabstand von 820mm erreicht werden kann. Somit sollte bei einem absoluten Sitzabstand zwischen den Sitzen von 860mm ein Crashelement von 40mm Dicke eingesetzt werden.

Die Sitzfläche kann mindestens ein Sitzpolster mit einer Sitzfläche umfassen. Die Polsterung kann ein Rückenpolster umfassen. Das Rückenpolster ist bevorzugt an der Rückenschale befestigt.

Das Crashelement ist dabei von der Rückseite her an der Rückenschale angebracht. Das Crashelement ist nicht innerhalb des Sitzes angeordnet und daher nicht von einer Sitzverschalung oder einem Sitzbezug bedeckt. Bevorzugt bildet die Rückenschale einen Teil der tragenden Struktur des Sitzes, so dass das Crashelement lediglich an der Rückenschale befestigt sein kann. Alternativ oder zusätzlich kann das Crashelement aber auch an anderen tragenden Teilen des Sitzes, insbesondere an Trägern der Sitzstruktur, befestigt sein.

Die Rückenschale kann eine Befestigungsvorrichtung umfassen, die zu dem Befestigungssystem des Crashelementes korrespondierend ausgebildet ist, so dass das Befestigungssystem an der Befestigungsvorrichtung befestigbar ist. Insbesondere ist das Crashelement an der Rückenschale unlösbar, bevorzugt aufgeklebt oder vernietet, oder lösbar, bevorzugt verschraubt, befestigt. Die Rückenschale kann daher ebenfalls Öffnungen zum Vernieten oder Verschrauben, und/oder Schrauben und/oder Gewinde und/oder einen Druckknopfkopf oder eine Druckknopfkopfaufnahme umfassen.

Somit kann das Crashelement leicht montiert werden.

Die Befestigungsvorrichtung kann so angeordnet sein, dass sie nicht durch Verkleidung oder Bezug verdeckt ist, sondern bevorzugt in einer fertig montierten Position der Rückenschale von aussen zugänglich ist.

Bevorzugt ist ein unteres Crashelement in einer Einbauposition des Fahrgastsitzes im unteren Bereich der Rückenschale angebracht, z.B. auf Höhe des Sitzpolsters, um dort den Aufprall eines in einer auf gleichem Niveau angeordneten Sitzreihe hinter dem Fahrgastsitz sitzenden Passagiers im Kniebereich zu dämpfen.

Das untere Crashelement kann ausgebildet sein, den Aufprall des Knies der aufprallenden Person zu dämpfen. Das untere Crashelement kann zwischen 130-200mm, bevorzugt bei im Wesentlichen 170mm, über einer unteren Kante der Rückenschale angeordnet sein.

Somit wird die Verletzungsgefahr im Kniebereich verringert.

Ein mittleres Crashelement kann in einer Einbauposition des Fahrgastsitzes im mittleren Bereich der Rückenschale, insbesondere höher als das untere Crashelement, angeordnet sein, um den Aufprall eines in einer auf einem höheren Niveau angeordneten Sitzreihe hinter dem Fahrgastsitz sitzenden Passagiers im Kniebereich oder den in einer auf einem tieferen Niveau angeordneten Sitzreihe hinter dem Fahrgastsitz sitzenden Passagiers im Kopfbereich zu dämpfen.

Somit wird die Verletzungsgefahr im Kniebereich oder Kopfbereich verringert.

Ein oberes Crashelement kann in einer Einbauposition des Fahrgastsitzes im oberen Bereich, insbesondere oberhalb des mittleren Crashelementes, der Rückenschale oder an einer Kopfstütze angeordnet sein, um den Aufprall eines in einer Sitzreihe hinter dem Fahrgastsitz sitzenden Passagiers im Kopfbereich zu dämpfen.

Somit wird die Verletzungsgefahr im Kopfbereich verringert.

Position und Erstreckung der Crashelemente sind abhängig von der Konfiguration der Sitzreihen, also neben dem Sitzteiler von ihrem relativem Höhen- oder Querversatz und den geforderten Dämpfungseigenschaften. Bevorzugt erstreckt sich das Crashelement im Wesentlichen über die ganze Sitzbreite, insbesondere über 95% der Rücklehnenbreite, bevorzugt über maximal 100% der Rücklehnenbreite.

Die Rücklehnenbreite ist die maximale Ausdehnung der Rücklehne quer zur Längsachse der Rücklehne. Das Crashelement darf nicht grösser sein als die Rücklehnenbreite. So wird verhindert, dass Passagiere behindert werden.

Bei dem Crashelement kann es sich um ein Kissen aus Schaumstoff, insbesondere Integralschaum, und/oder um einen metallischen Crashabsorber handeln, bei dem Strukturen vorgesehen sind, die sich im Falle eines Aufpralls plastisch verformen oder das Crashelement kann solche Kissen oder Absorber umfassen. Der Integralschaum kann aus Polyurethanen, aber auch aus Polyethylen, Polypropylen, Polystyrol, ABS und Polycarbonaten hergestellt sein. In einer Variante umfasst das Crashelement keine betätigbaren Komponenten wie eine Schwenkeinrichtung oder entfaltbare Komponenten wie einen Airbag. So ist die Funktionsfähigkeit einfach sicherzustellen.

In anderen Varianten des Crashelements können solche Elemente umfasst sein, beispielsweise fluidgefüllte (Blase mit dickflüssiger Flüssigkeit oder Luftpolster) oder -füllbare Elemente. Eine Oberfläche des Crashelements kann dazu ausgelegt sein, dass sie eine Korrosionsbeständigkeit aufweist, welche einen 1000h Salzsprühtest übersteht. Die Oberfläche kann pulverbeschichtet, lackiert oder auf andere geeignete Weise behandelt oder beschichtet sein.

Die Crashelemente sind in jedem Falle so ausgestattet, dass sie an der Rückenschale des Fahrgastsitzes anbringbar, insbesondere verschraubbar und/oder vernietbar sind, also zum Vernieten oder Verschrauben geeignete entsprechende Durchgangslöcher aufweisen, oder verklebbar, also über eine entsprechend ausgebildete Kontaktfläche verfügen. Alternativ oder zusätzlich, können die Crashelemente auch mit Druckknöpfen an der Rückenschale befestigbar sein und daher einen Druckknopfkopf oder eine Druckknopfkopfaufnahme umfassen. Das jeweilige Gegenstück ist dann auf der Rückenschale korrespondierend angeordnet.

Mit derartigen Crashelementen ist es nicht nur möglich fabrikneue Fahrgastsitze optimal an die nötigen Anforderungen anzupassen, sondern es lassen sich auch bestehende Fahrgastsitze nachrüsten, z.B. wenn diesem im Rahmen eines Umbaus anders verwendet werden oder um sie an gestiegene Anforderungen anzupassen. Dazu werden lediglich für die spezifischen zu erfüllenden Anforderungen in Verbindung mit dem Sitz optimierten Crashelemente ausgewählt und an die bestehenden Sitze montiert. Die Bestimmung der nötigen Eigenschaften der Elemente erfolgt durch geeignete Auslegeverfahren unter berücksichtigung der relevanten Parameter wie z.B. der zu absorbierenden Energie und der Materialeigenschaften. Die anwendbare Normen sind dem Fachmann bekannt. Die Auslegung geschieht i.d.R. theoretisch, z.B. mittels FE-Berechnungen und/oder praktisch, z.B. durch Versuchsreihen.
Zur Lösung der Aufgabe führt weiterhin ein Schienenfahrzeug mit mindestens einem Fahrgastsitz wie vorhergehend beschrieben. Bevorzugt weist das Schienenfahrzeug mindestens zwei Fahrgastsitze auf, wobei diese in Fahrtrichtung hintereinander angeordnet sind. Der hintere Fahrgastsitz kann auf einer gleichen, tieferen oder einer höheren Ebene angeordnet sein als der vordere Fahrgastsitz.

Ein derartiges Schienenfahrzeug schützt die Fahrgäste vor Verletzungen im Falle eines Unfalls.

Zur Lösung der Aufgabe führt weiterhin ein Verfahren zur Herstellung eines Fahrgastsitzes, wobei das Crashelement von der zweiten Seite der Rücklehne an der Rücklehne des Fahrgastsitzes befestigt, insbesondere verschraubt, vernietet oder geklebt, wird.
Somit lässt sich ein sicheres Schienenfahrzeug leicht herstellen.

Alternativ kann ein Verfahren zur Crashsicherung eines Fahrzeuges, insbesondere eines Schienenfahrzeuges, bereitgestellt werden. Das Verfahren umfasst die Schritte:
- Bereitstellen eines Fahrzeuges mit darin angeordneten Fahrgastsitzen, wobei das Fahrzeug mindestens einen ersten Fahrgastsitz und einen zweiten Fahrgastsitz umfasst, welche jeweils eine Rückenlehne umfassen, wobei in Längsrichtung des Fahrzeugs der erste Fahrgastsitz hinter dem zweiten Fahrgastsitz angeordnet ist,
- Bereitstellen mindestens eines Crashelementes, insbesondere eines Crashelementes wie vorhergehend beschrieben, wobei das Crashelement insbesondere so ausgelegt ist, dass ein Abstand eines ersten, hinteren Sitzes zu einem zweiten, vorderen Sitz, maximal 820mm beträgt
- Befestigen des Crashelements an einer unteren Seite der zweiten Seite des Fahrgastsitzes, bevorzugt durch verschrauben, vernieten oder kleben.

Die Erfindung wird im Folgenden an Hand von Figuren genauer beschrieben.

Dabei zeigt:
- Figur 1: Einen Fahrgastsitz in einer ersten Ausführungsform;
- Figur 2a: Eine Anordnung von mehreren Fahrgastsitzen hintereinander;
- Figur 2b: Eine Anordnung von mehreren Fahrgastsitzen hintereinander in einer alternativen Ausführungsform.
- Figur 3: Eine Seitenansicht eines Crashelements

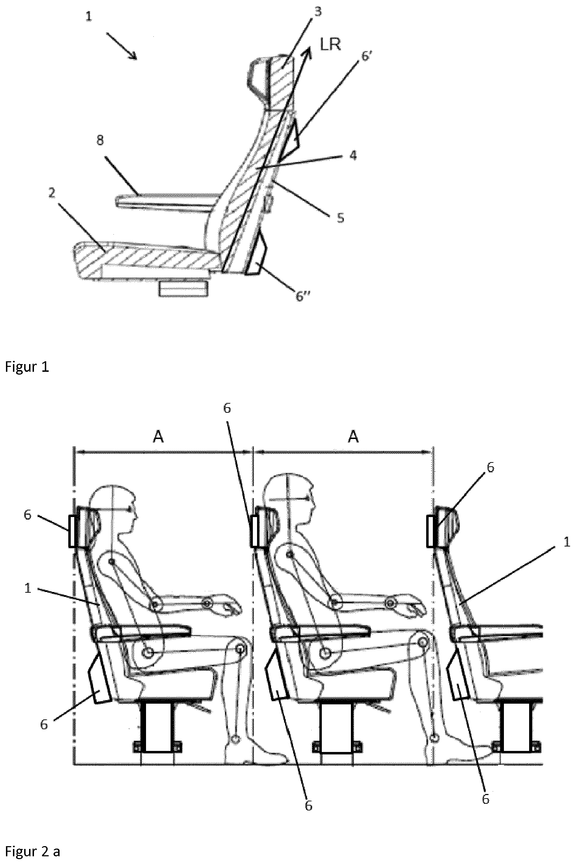

Figur 1 zeigt eine Ausführungsform eines Fahrgastsitzes 1 mit einem Sitzpolster 2, Kopfstütze 3 und Rückenpolster 4. Weiter verfügt der Sitz über ein nicht gezeigtes Sitzgestell 7 und eine Rückenschale 5, an der die Crashelemente 6',6" angebracht sind. Der Fahrgastsitz 1 umfasst ein mittleres Crashelement 6', hier im Kopfbereich, und ein unteres Crashelement 6", hier im Kniebereich . Beide Crashelemente bestehen aus einer Schaumplatte aus Polyurethanintegralschaum. Die Crashelement Umfassen jeweils ein Einlegeelement (hier nicht gezeigt), welches mit der Rückenschale 5 verschraubt ist. Das untere und das mittlere Crashelement 6', 6" sind mit der Rückenlehne verschraubt. Der Sitz weist weiter eine Armlehne 8 auf. Die Crashelemente sind jeweils unterschiedlich geformt, um die benötigten Sitzabstände einzuhalten, so dass die auftretende Energie absorbiert werden kann.

Figur 2a zeigt einen Ausschnitt einer Bestuhlung eines Schienenfahrzeuges, bei dem die Fahrgastsitze 1 Sitzreihen mit einem Sitzteiler A bilden. An den Fahrgastsitzen 1 sind die Crashelemente 6",6"'angebracht. Im Ausführungsbeispiel von Figur 2a befinden sich die Sitzreihen auf gleichem Niveau, daher sind auch die Crashelemente 6", 6"' niveaugleich montiert. Jeder Sitz umfasst ein oberes Crashelement 6"' und ein unteres Crashelement 6". Die Crashelemente 6", 6"' bestehen aus einer Schaumplatte aus Polyurethanintegralschaum. Das untere und das obere Crashelement 6", 6"' sind mit der Rückenlehne verschraubt. Das untere Crashelement 6" weist eine grössere Dicke auf als das obere Crashelement 6"'.

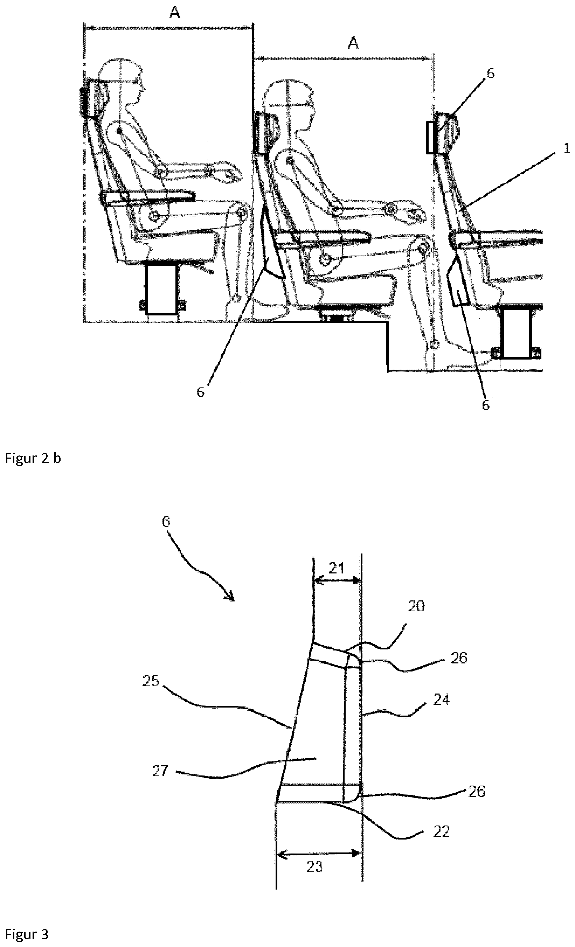

Figur 2b zeigt höhenversetzt angeordnete Sitzreihen in einem Schienenfahrzeug, bei denen Crashelemente 6 jeweils auf der für den in der nächst hinteren Sitzreihe sitzenden Passagier passenden Höhe montiert sind. Alle anderen Details entsprechen der Figur 2a.

Figur 3 zeigt eine Seitenansicht einer Ausführungsform des Crashelements 6". Das Crashelement 6" umfasst eine im Wesentlichen trapezförmige Seitenfläche 27. Die Seitenfläche 27 umfasst eine Oberseite 20, die in einer Befestigungsposition am Sitz oben angeordnet ist und eine der Oberseite 20 gegenüberliegende Unterseite 22, die in der Befestigungsposition unten angeordnet ist. Weiter umfasst die Seitenfläche 27 eine Befestigungsseite 25, welche in der Befestigungsposition an der Rückenlehne eines Sitzes angeordnet ist. Die Befestigungsseite 25 ist in einem Winkel von 78° zur Unterseite 22 angeordnet. Der Befestigungsseite 25 gegenüberliegend ist eine Crashseite 25 angeordnet. Die Crashseite 25 ist in einem Winkel von 90° zur Unterseite 22 angeordnet. Die Oberseite 20 ist in einem Winkel von 105° zur Crashseite 25 angeordnet. Die Ecken 26 zwischen der Crashseite 24 und der Oberseite 20 und der Unterseite 22 sind mit einem Radius von 10mm abgerundet.

Die Unterseite 22 umfasst eine minimale Dicke 23 von 50 mm von der Befestigungsseite 25 auf die Crashseite 24. Die Oberseite 20 umfasst eine minimale Dicke 21 von 29.2mm von der Befestigungsseite 25 auf die Crashseite 24.

## Patentansprüche

1. Crashelement zur Befestigung an einem Fahrgastsitz eines Schienenfahrzeuges umfassend ein Dämpfelement zur Aufnahme von Kräften bei einem Aufprall, **dadurch gekennzeichnet, dass** es ein Befestigungssystem umfasst, welches derart ausgebildet ist, dass es eine Befestigung an einer Rückenschale eines Fahrgastsitzes ermöglicht, insbesondere eine Klebstofffläche und/oder eine Schraubvorrichtung und/oder Öffnungen zum Vernieten, aufweist.

2. Crashelement nach Anspruch 1, **dadurch gekennzeichnet, dass** das Dämpfelement eine Dicke von 5 mm bis 150 mm aufweist und insbesondere derart ausgebildet ist, dass bei einem auslegungsgemässen Aufprall sowohl elastische als auch plastische Verformungen stattfindet.

3. Crashelement nach einem der Ansprüche 1 oder 2, **dadurch gekennzeichnet, dass** das Crashelement eine Oberseite umfasst, welche in einer Befestigungsposition oben angeordnet ist, und eine Unterseite in einer Befestigungsposition unten angeordnet ist, wobei die Oberseite eine minimale Dicke von im Wesentlichen 10-35, bevorzugt im Wesentlichen 29mm, und die Unterseite eine minimale Dicke von im Wesentlichen 25-75mm, bevorzugt im Wesentlichen 50mm, umfasst.

4. Crashelement nach einem der vorhergehenden Ansprüche,
**dadurch gekennzeichnet, dass** das Befestigungssystem ein Einlegelement zum Verschrauben mit dem Fahrgastsitz umfasst.

5. Fahrgastsitz, insbesondere für ein Schienenfahrzeug, umfassend eine Rückenlehne und einen Sitzbereich, wobei die Rückenlehne mindestens eine Polsterung und eine Rückenschale, insbesondere eine mehrteilige Rückenschale, umfasst, wobei die Rückenlehne an einem tragenden Sitzgestell befestigt ist oder einen Teil des tragendes Sitzgestells bildet und die Polsterung auf einer ersten Seite der Rückenschale angeordnet ist, **dadurch gekennzeichnet, dass** auf einer zweiten Seite der Rückenschale, welche von der Polsterung weg weist mindestens ein Crashelement gemäss einem der vorhergehenden Ansprüche befestigt ist.

6. Fahrgastsitz nach Anspruch 5, **dadurch gekennzeichnet, dass** die Rückenschale eine Befestigungsvorrichtung umfasst, die zu dem Befestigungssystem des Crashelementes korrespondierend ausgebildet ist, so dass das Befestigungssystem an der Befestigungsvorrichtung befestigbar ist, und insbesondere das Crashelement an der Rückenschale unlösbar, bevorzugt aufgeklebt oder vernietet, oder lösbar, bevorzugt verschraubt, befestigt ist.

7. Fahrgastsitz nach einem der Ansprüche 5 oder 6, **dadurch gekennzeichnet, dass** ein unteres Crashelement in einer Einbauposition des Fahrgastsitzes im unteren Bereich der Rückenschale angeordnet ist, um den Aufprall eines in einer auf gleichem Niveau angeordneten Sitzreihe hinter dem Fahrgastsitz sitzenden Passagiers im Kniebereich zu dämpfen.

8. Fahrgastsitz nach einem der Ansprüche 5 bis 7, **dadurch gekennzeichnet, dass** ein mittleres Crashelement in einer Einbauposition des Fahrgastsitzes im mittleren Bereich der Rückenschale, insbesondere höher als das untere Crashelement, angeordnet ist, um den Aufprall eines in einer auf einem höheren Niveau angeordneten Sitzreihe hinter dem Fahrgastsitz sitzenden Passagiers im Kniebereich oder den in einer auf einem tieferen Niveau angeordneten Sitzreihe hinter dem Fahrgastsitz sitzenden Passagiers im Kopfbereich zu dämpfen.

9. Fahrgastsitz nach einem der Ansprüche 5 bis 8, **dadurch gekennzeichnet, dass** ein oberes Crashelement in einer Einbauposition des Fahrgastsitzes im oberen Bereich, insbesondere oberhalb des mittleren Crashelementes, der Rückenschale oder an einer Kopfstütze angeordnet ist, um den Aufprall eines in einer Sitzreihe hinter dem Fahrgastsitz sitzenden Passagiers im Kopfbereich zu dämpfen.

10. Schienenfahrzeug mit mindestens einem Fahrgastsitz gemäss einem der Ansprüche5 bis 9.

11. Verfahren zur Herstellung eines Fahrgastsitzes, insbesondere eines Schienenfahrzeugfahrgastsitzes gemäss Anspruch 10, **dadurch gekennzeichnet, dass** das Crashelement von der zweiten Seite der Rücklehne an der Rücklehne des Fahrgastsitzes befestigt, insbesondere verschraubt, vernietet oder geklebt, wird.

12. Verwendung eines Crashelementes gemäss einem der Ansprüche 1 bis 4 zur Dämpfung eines Aufpralles einer Person auf einen Fahrgastsitz eines Schienenfahrzeuges, wobei das Crashelement auf einer der Sitzpolsterung der Rücklehne abgewandten Seite angeordnet ist.
